## Europäisches Patentamt

## European Patent Office

## Office européen des brevets

(11) Veröffentlichungsnummer: **0 113 841**
**B1**

(12)
# EUROPÄISCHE PATENTSCHRIFT

(45) Veröffentlichungstag der Patentschrift:
**27.12.89**

(51) Int. Cl.⁴: **B 29 C 67/14, F 16 L 9/14**

(21) Anmeldenummer: **83111920.1**

(22) Anmeldetag: **29.11.83**

(54) **Verfahren zur Herstellung eines Formkörpers aus Verbundmaterial und nach diesem Verfahren hergestellter Formkörper.**

(30) Priorität: **17.12.82 DE 3246755**

(43) Veröffentlichungstag der Anmeldung:
**25.07.84 Patentblatt 84/30**

(45) Bekanntmachung des Hinweises auf die Patenterteilung:
**27.12.89 Patentblatt 89/52**

(84) Benannte Vertragsstaaten:
**AT DE FR GB IT SE**

(56) Entgegenhaltungen:
**EP-A-0 012 167**
**CH-A-343 723**
**CH-A-538 079**
**DE-A-2 603 765**
**DE-A-2 706 899**
**FR-A-1 177 918**
**FR-A-1 246 493**
**US-A-2 654 686**
**US-A-3 196 533**
**US-A-3 345 233**

(73) Patentinhaber: **AEROTEX Hochleistungsfaser GmbH, Siemensring 31, D-4156 Willich 1 (DE)**

(72) Erfinder: **Pott, Richard, Tannenbergstrasse 33, D-4937 Lage/Lippe (DE)**

(74) Vertreter: **Loesenbeck, Karl- Otto, Dipl.- Ing., Jöllenbecker Strasse 164, D-4800 Bielefeld 1 (DE)**

LIBER, STOCKHOLM 1989

## Beschreibung

Die Erfindung betrifft ein Verfahren zur Herstellung eines Formkörpers aus Verbundmaterial gemäß dem Oberbegriff des Anspruchs 1.

Ein derartiges Verfahren ist aus der DE-A-2 706 899 bekannt.

Die Belastbarkeit eines nach diesem Verfahren hergestellten Formkörpers ist jedoch unzureichend, da insbesondere die Aufnahme von Tangentialkräften nur in unbefriedigendem Maße möglich ist.

Ein gattungsähnliches Verfahren ist weiterhin aus der europäischen Patentanmeldung 79 103 881.3 bekannt. Die nach diesem Verfahren hergestellten Formkörper haben den Vorteil, daß sie mit wenig apparativem Aufwand in Leichtbauweise hergestellt werden können.

Jedoch ist auch dieses Verfahren nicht geeignet Formkörper herzustellen, die eine ausreichende Belastbarkeit in der oben genannten Art aufweisen.

Der vorliegenden Erfindung liegt daher die Aufgabe zugrunde, ein Verfahren der gattungsgemäßen Art so weiterzuentwickeln, daß sich ein Formkörper herstellen läßt, dessen Belastbarkeit unter Beibehaltung seiner Leichtbauweise verbessert wird.

Diese Aufgabe wird erfindungsgemäß durch die im Kennzeichen des Anspruchs 1 genannten Merkmale gelöst.

Mit dem erfindungsgemäßen Verfahren ist es nun möglich, einen Formkörper zu schaffen, der sich im Gewicht kaum von vorbekannten Formkörpern unterscheidet, der aber erheblich höher belastbar ist.

Insbesondere die befriedigende Aufnahme von Tangentialkräften wird dadurch erreicht, daß eine kunstharzgetränkte, selbsttragende und Last aufnehmende Verbindungsschicht zwischen jeweils zwei die Zellkern- oder Wabenschicht bildenden Schichten angeordnet wird. Auf diese Art und Weise wird nicht nur die Lastaufnahmefähigkeit des gesamten Gebildes erhöht, sondern auch verhindert, daß sich die Mehrfach- bzw. Doppelschicht bildenden Zellkern- oder Wabenschichten gegeneinander verschieben.

Es erübrigen sich also zusätzliche, auftretende Tangentialkräfte aufnehmende Maßnahmen.

Darüber hinaus ermöglich die erhöhte Belastbarkeit eines nach dem erfindungsgemäßen Verfahren hergestellten Formkörpers natürlich eine geringere Dimensionierung als bei den bekannten Körpern, so daß sich zumindest hinsichtlich eines verminderten Materialverbrauchs ein erwähnenswerter wirtschaftlicher Vorteil ergibt.

Dieser Vorteil wird noch dadurch gesteigert, daß die Zellkern- oder Wabenschichten vorzukonfektionieren und bei Bedarf nach einem entsprechenden Zuschnitt einzusetzen sind.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:

Fig. 1 einen Formkörper im Schaubild, wobei die einzelnen Schichten unterschiedlich weit aufgerissen sind, um sie zur Darstellung zu bringen,

Fig. 2 einen möglichen Querschnitt durch eine mögliche einzulegende Zellkern- oder Wabenschicht,

Fig. 3 + 4 die Möglichkeit der Herstellung einer positiven Form,

Fig. 5 den ersten Schritt des Verfahrens mit Aufbringung der ersten Laminatschicht auf die Form,

Fig. 6 ein mögliches Ausführungsbeispiel des weiteren Aufbaues,

Fig. 7 die Aufbringung der zweiten Laminatschicht, und zwar der äußeren Stützschicht auf die Form,

Fig. 8, 9 + 9a unterschiedliche Ausführungsbeispiele der Ausbildung der Zellkern oder Wabenschicht, bzw. einer Schicht mit zellartiger Struktur,

Fig. 10 ein Schaubild einer solchen Schicht im Ausschnitt,

Fig. 11 einen Schnitt durch eine Doppelschicht, die als Zellkern- oder Wabenschicht ausgebildet ist,

Fig. 12, 13, 14 verschiedene Ausführungsbeispiele von Formkörpern, die nach der Erfindung hergestellt sind,

Fig. 15 einen Formkörper mit fertigem Schichtaufbau, der durch einen Wickel aus einem Preßband gehalten wird, der nach Aushärtung entfernbar ist, Fig. 16, 17, 18 weitere Ausführungsbeispiele von Formkörpern.

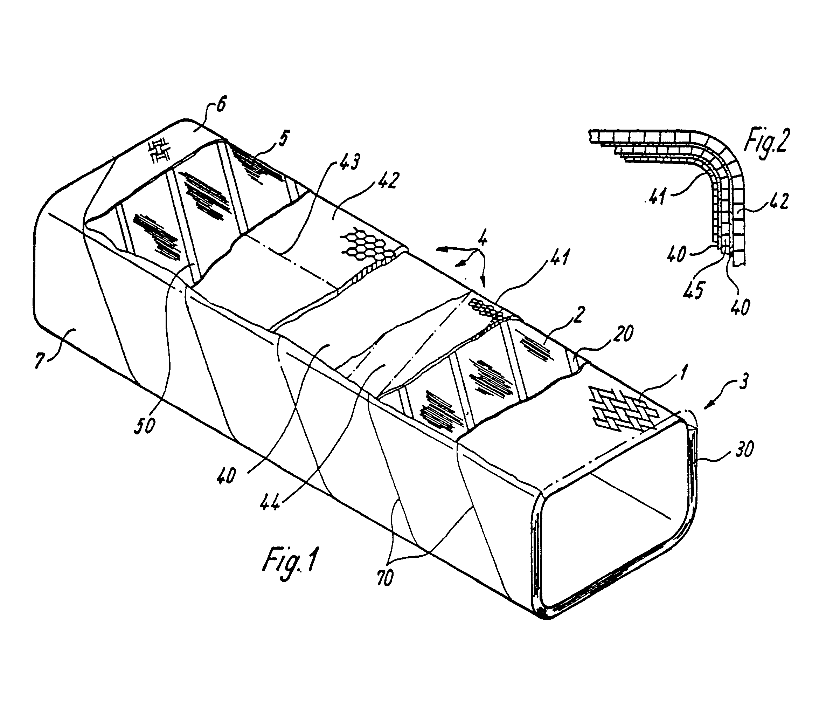

Auf eine positive Form, die in den Fig. 1 und 2 nicht dargestellt ist, wird als erste Laminatschicht eine innere Stützschicht 1 aus Glasfasern, Glasgewebe, -gewirke oder -geflecht als Strumpf oder gewickelt aufgebracht. In Fig. 1 ist ein Geflecht gezeigt. Auf dieser Stützschicht 1 liegt als innere Schalenschicht 2 eine weitere Schicht, bestehend aus unidirektional gelegten Kohlefasern. Beide Schichten können kunstharzgetränkt sein und miteinander zunächst ausgehärtet werden. Zur Aufbringung der Schalenschicht 2 werden die unidirektional liegenden Kohlefasern durch Klebebänder 20 miteinander verbunden. Damit ist es leichter, das Material auf die innere Stützschicht 1 aufzulegen.

Die innere Stützschicht 1 kann ein Rundgeflecht sein, es besteht aber auch die Möglichkeit, diese innere Stützschicht durch stumpfes Aneinanderlegen der Randkanten zu einem Rohr zu formen oder in Wendelform das Band auf die Form aufzulegen. Durch die innige Verbindung mit der Schalenschicht 2 ist auch dann eine genügende Stabilität vorhanden.

Mittig in der Wandung 30 des Formkörpers 3 liegt die Zellkern- oder Wabenschicht 4, die als Mehrfachschicht, vorzugsweise, wie dargestellt, Doppelschicht ausgebildet sein kann. Sie besteht bei dem dargestellten Ausführungsbeispiel der Fig. 1 aus einer Einheit, wobei mittig eine Verbindungsschicht 40 vorgesehen ist. Diese kann aus Papier, Kunststoff, Folie, Glasfasergewebe, Carbonfaservlies, Polyimid od. dgl. bestehen bzw. aus einem getränkten Vlies oder Gewebe. Die Tränkung kann wieder ein Kunstharz sein. Diese Verbindungsschicht verbindet zwei Zellkern- oder Wabenschichten miteinander, und zwar eine innere Zellkern oder Wabenschicht 41 und eine äußere Zellkern- oder Wabenschicht 42. Wie aus der Fig. 1 ersichtlich, kann die Mehrfach- oder Doppelschicht unterschiedliche Größen bzw. Höhen in den Zellkernen oder Waben aufweisen. Die Zellkern- oder Wabenschicht 4, sei sie nun als einfache Schicht oder als Mehrfachschicht ausgebildet, kann entweder durch eine Stoßverbindung 43 die innere Schalenschicht und die innere Stützschicht 1 umgreifen oder kann, wie ebenfalls in Fig. 1 strichpunktiert angedeutet, als Wickelstreifen 44 aufgelegt werden. Auch die Wickelstreifen liegen dann stoßend nebeneinander.

Liegt die Zellkern- oder Wabenschicht 4 auf, wird sie durch das äußere Laminat bedeckt. Dieses besteht wiederum aus einer äußeren Schalenschicht 5, bestehend wieder aus unidirektional liegenden Kohlefasern, die ggf. durch eine Schweißung oder auch durch Klebebänder 50 miteinander gehalten werden und einer äußeren Stützschicht, bestehend wiederum aus Glasfasern, Glasfasergewebe, -gewirke oder -geflecht. Die äußere Schalenschicht 6 ist bei der dargestellten Fig. 1 wiederum als Geflecht ausgebildet. Beide Schichten 5 und 6 können wiederum kunstharzgetränkt sein und feucht aufgebracht werden. Die unidirektionalen Kohlefasern können auch in Prepregsform vorliegen als mit Harz vorgetränkte Gelege, die unter Wärmezufuhr aushärten.

Der fertige Schichtaufbau kann dann durch einen Wickel 7, bestehend aus einem Preßband, gehalten werden, der nach Aushärtung des gesamten Formkörpers entfernbar ist. Dieser Wickel besteht vorzugsweise aus einem Polyamid-Abreißband.

Somit wird nach Aufbringung von Stütz- und/oder Schalenschichten als erste Laminatschicht 1, 2 auf die positive Form oder den Kern und Auflage der Zellkern- oder Wabenschicht 4 in Ein- oder Mehrfachlage eine weitere Laminatschicht 5, 6, bestehend aus Stütz-und/oder Schalenschichten, aufgebracht.

Die Ausbildung und Zusammensetzung der Laminatschichten ist veränderbar. Vorteilhaft ist es, daß die Stützschichten immer Glasfaserschichten und die Schalenschichten aus Kohlefasern bestehen, deren unidirektional liegende Fäden in Achsrichtung des Formkörpers angeordnet sind, womit sie den größtmöglichen längsverstärkenden Effekt bringen. Die innere Stützschicht und auch die äußere Stützschicht muß nicht unbedingt aus Glasfasern bestehen, sie kann aus Aramid oder Carbon bestehen und, wie bereits erwähnt, in Schlauchform als Gewebe oder als Geflecht aufgebracht werden.

Weiterhin ist es möglich, daß die Kohlefasern der inneren und der äußeren Schalenschicht nicht unidirektional liegen, sondern daß die Kohlefasern oder Carbonfasern als Flechtschlauch aufgebracht werden, wenn beispielsweise keine Stützschichten vorgesehen sind.

Wie bereits erwähnt, kann somit die einzelne Laminatkonstruktion unterhalb und/oder oberhalb der Zellkern oder Wabenschicht unterschiedlich ausgebildet sein.

Die Aufbringung eines Wickels aus einem Preßband, der wieder entfernt werden kann, ist sehr vorteilhaft. Nicht nur, daß die Form des Formkörpers exakt bis zur Aushärtung gehalten wird, sondern das Laminat wird verdichtet, die Luft in demselben wird herausgedrückt und es geschieht eine Vergleichmäßigung der Tränkschichten. Diese Wickel werden derart stramm gezogen, daß keine Luftblasen im Laminat verbleiben, da Lufteinschlüsse zwischen den Laminatschichten eine Verminderung der Belastungsfähigkeit des Formkörpers darstellen könnten. Die Wickel werden somit unter starker Vorspannung aufgezogen.

Sollten Scherkräfte vom Formkörper später aufgenommen werden müssen oder quer zum Formkörper gehende Druckkräfte, so ist es vorteilhaft, einen Doppel-Zellkern vorzusehen durch Anordnung von Mehrfachschichten oder Doppelschichten der Zellkern- oder Wabenschicht. Von innen nach außen werden vorzugsw. die Zellkerne oder Waben in der Höhe größer und/oder die Wabendurchmesser wachsen ggf. auch. Als Verbindungsschicht zwischen den einzelnen Doppel-Zellkernschichten oder Wabenschichten kann ein getränktes Gewebe oder Vlies angeordnet sein auf der Basis Glas-, -Aramid- oder Carbonfasern, getränkt mit Mehrkomponenten-Kunstharz.

In Fig. 2 ist der Aufbau einer Mehrfachschicht gezeigt mit unterschiedlichen Größen in der Zellkern- oder Wabenausbildung. Bei diesem Ausführungsbeispiel sind zwei Verbindungsschichten 40 vorgesehen, eine größere, äußere Zellkern- oder Wabenschicht 42 und eine innere, kleinere Zellkern- oder Wabenschicht 41, sowie eine mittlere Zellkern- oder Wabenschicht 45. Durch diese Ausbildung ist es möglich, auch kleinere Radien des Formkörpers zu umlegen. Vor allem ist dies wichtig, wenn beispielsweise Vierkantrohre hergestellt werden sollen, wie es in Fig. 1 gezeigt ist.

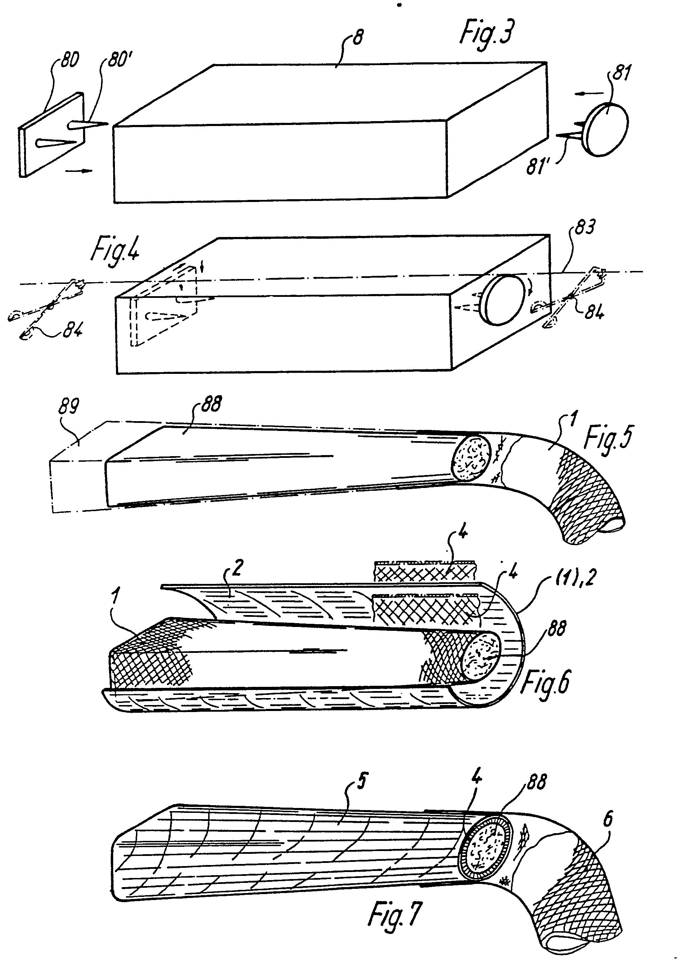

Die Fig. 3 bis 7 zeigen mögliche Arbeitsschritte zur Herstellung eines erfindungsgemäßen Formkörpers. Ein Formklotz 8, beispielsweise aus Polystyrol-Hartschaum od. dgl. wird an seinen beiden Enden mit Schablonen 80 und 81 versehen, die vorzugsweise Stifte 80' und 81' tragen. Diese Stifte werden in, das Schablonenmaterial eingedrückt.

Anschließend wird ein erhitzter Draht 83 gemäß der Darstellung der Fig. 4 um die Außenkanten der Schablonen herumgeführt, z. B. durch Zangen 84. Dies ist vorbekannt. Dadurch ergibt sich eine positive Form 88. Diese Form kann mit einer Folie 89 umkleidet werden, es kann aber auch ein Trennmittel aufgetragen werden, wenn ein Formkörper hergestellt werden soll, bei dem die positive Form entfernt werden muß.

Über die somit hergestellte positive Form 88 wird dann als innere Stützschicht 1 das Glasfasergewebe, der Strumpf od. dgl. gezogen, wie es in Fig. 5 dargestellt ist. Anschliessend wird die aus unidirektional liegenden Carbonfasern bestehende Schalenschicht 2 entweder direkt aufgelegt, und zwar mit Mehrfachkomponenten-Kunstharz getränkt oder schon, wie in der Fig. 6 dargestellt, eine Schicht mit zellartigem Aufbau bzw. eine Zellkern- oder Wabenschicht 4, vorher eingelegt werden oder mit dieser einen Laminatschicht 1, 2 spiralförmig auf den Kern aufgewickelt werden (Fig. 6).

Darüber kommt auf jeden Fall wieder oder auch allein liegend eine Zellkern- oder Wabenschicht 4 od. dgl. Diese kann als Einfachschicht, Mehrfachschicht oder Doppelschicht ausgebildet sein. Die Zellachsen stehen, sofern sie gleichgerichtet bzw. parallelgerichtet sind, radial zu der positiven Form 88.

Über diese mittig liegende Schicht mit zellartigem Charakter bzw. Zellkern- oder Wabenschicht 4 wird wiederum eine Carbonfaserschicht als Schalenschicht 5 gelegt, wie es in Fig. 7 dargestellt ist, über die dann wieder die Stützschicht 6, vorzugsweise aus Glasfasern, gezogen wird. Diese kann wiederum getränkt sein und die Tränkung dieser Schichten kann wiederum aus einem Mehrkomponenten-Kunstharz bestehen. Nach Aushärtung ist der Formkörper fertig hergestellt.

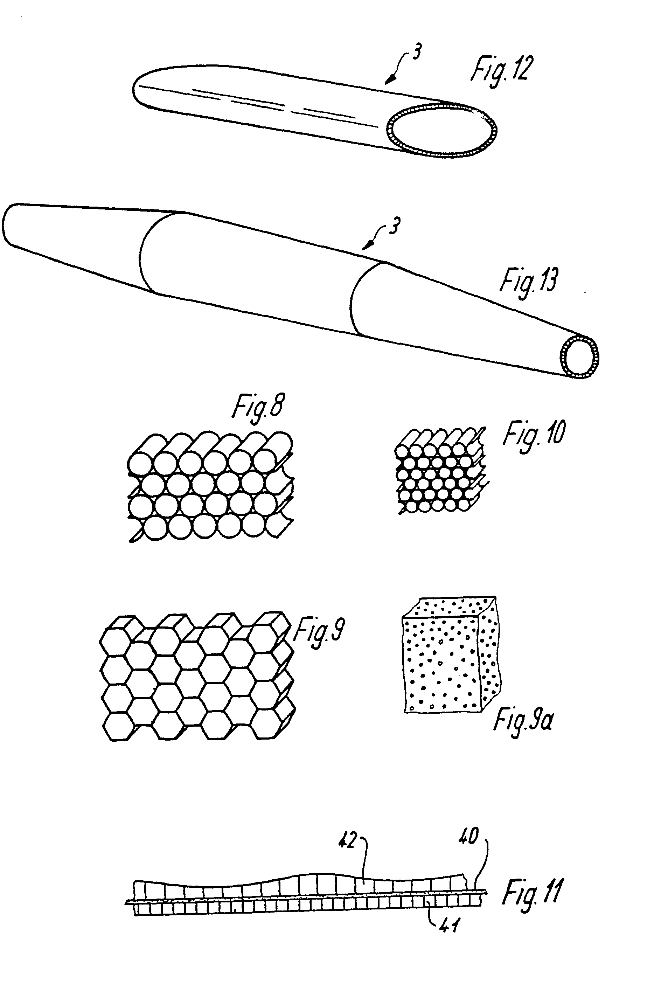

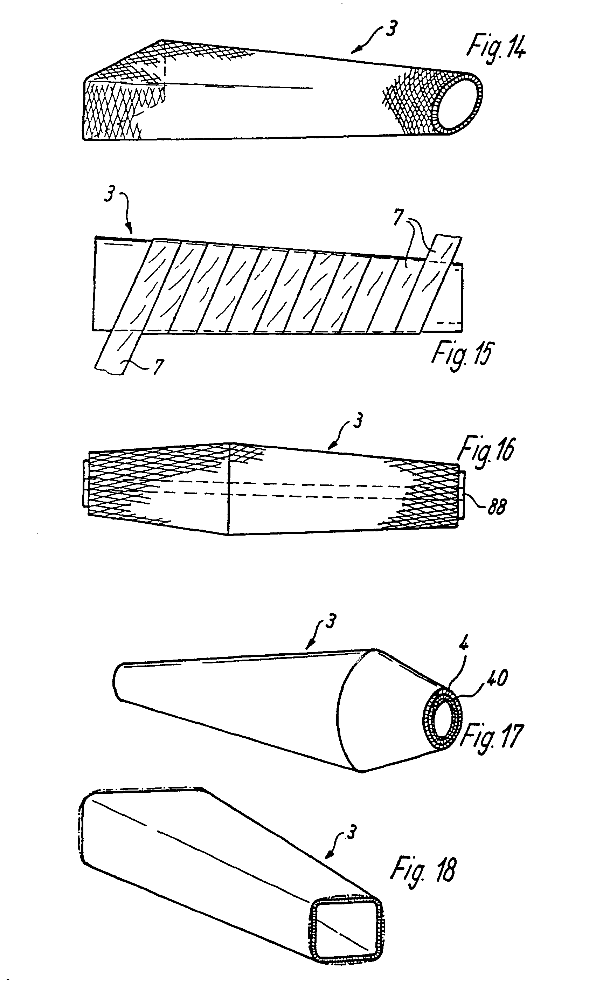

In den Fig. 8, 9, 9a und 10 sind unterschiedliche Ausbildungen der Schicht mit zellartigem Aufbau bzw. der Zellkern- oder Wabenschicht gezeigt. Diese Schichten Weisen vorzugsweise wenige mm Dicke auf, sie können etwa 5 mm Dicke haben, wenn sie als Einzelschicht in Platten- oder Streifenform eingelegt werden.

Diese Zellkern- oder Wabenschicht kann unterschiedlich hergestellt werden. Sie kann aus Kunststoff bestehen, und zwar aus einem Strangprofil, das aus schnell aushärtendem Material besteht. Dieses Profil, bei dem die Waben axial aus der Vorrichtung ausgestoßen werden, wird in entsprechend dicke Platten oder Scheiben geschnitten. Es besteht aber auch die Möglichkeit, die Zellkern- oder Wabenschicht durch Einzellamellen zu bilden, die entsprechend zusammengeklebt werden. Sie können aus Papier, Pappe, Kunststoff, Alu od. dgl. bestehen.

Ihre einzelnen Kerne können dabei vorzugsweise 6-eckig sein, da für die Streifenverbindung sich die 6-eckige Formgebung anbietet. Bei Strangprofilen können auch runde Formgebungen gewählt werden, wie es in den Fig. 8 und 10 dargestellt ist.

In der Fig. 9a ist ebenfalls eine Schicht mit zellartigem Aufbau dargestellt. Diese besteht aus einem Hartschaum von Polyurethan oder Polyvinylchlorid, Polyacryl, Polystyrol, Epoxyd, Polyethylen oder Polyester. Dies sind aber nur Beispiele. Wesentlich ist, daß der Hartschaum ebenfalls einen zellartigen Aufbau und einen Zellcharakter hat. Der Hartschaum kann geschlossen-oder offenporig sein. Er kann geschlossen- oder offenzellig ausgebildet sein, vorzugsweise mittelporig. Der Hartschaum kann in Platten oder in Streifen vorliegen, genauso wie die Wabenschicht, die in den Fig. 8, 9 und 10 dargestellt ist. Der Hartschaum wird genauso verarbeitet bzw. ähnlich wie die Zellkern- oder Wabenschicht. Es besteht aber auch die Möglichkeit, den Hartschaum, z. B. Polyurethan-Hartschaum, als flüssige Komponenten in bzw. auf das erste Laminat aufzubringen und erst im oder auf dem halbfertigen Werkstück aufzuschäumen. Diese Schicht wird dann anschließend, wie bei den übrigen angegebenen Verfahren, mit einer weiteren Laminatschicht als Stütz- und/oder Schalenschicht bedeckt und ggf. durch einen Wickel aus einem Preßband gehalten, der nach Aushärtung des gesamten Aufbaues dann entfernbar ist.

In Fig. 11 ist ein Querschnitt durch eine Doppelschicht gezeigt. Hier sind die oberen Zellkerne größer im Durchmesser ausgebildet als die unteren und haben auch eine größere Höhe als die in der Unterschicht liegenden Zellkerne, wobei noch die Möglichkeit gegeben ist, die Dicke der Schicht schwanken zu lassen. Je nach gewünschter Formgebung des Endproduktes wird die Ausbildung der oberen Zellkernschicht unterschiedlich gewählt werden. Man kann mit diesen, in der Höhe schwankenden Zellkernschichten, beispielsweise bei Profilrohren die Flächen ballig erscheinen lassen, während die schwächeren Bereiche der Zellkernschicht in die Eckführung gelegt werden, da mit geringeren Dicken leichter eine Ecke gebildet werden kann, wie sie in Fig. 2 dargestellt ist. Die Oberfläche einer solchen Doppelschicht verläuft somit wellenlinienförmig.

In den Fig. 12 und 13 sind weitere Formgebungen des Formkörpers gezeigt. Fig. 12 zeigt ein ovales Rohr mit innenliegender Zellkernschicht zwischen zwei Stütz- und/oder Schalenschichten. Fig. 13 zeigt eine zusammengesetzte Formgebung, und zwar ein zylindrisches Rohr mit angesetzten Kegelstümpfen. Diese Form läßt sich aber aus einem Stück herstellen.

In Fig. 14 ist das Endprodukt des Ausführungsbeispieles der Fig. 3 bis 7 gezeigt.

Fig. 15 zeigt die Möglichkeit, dieses Endprodukt mit einem Wickel 7 zu versehen, bestehend aus einem Preßband, das nach der Aushärtung entfernbar ist. Die Spuren dieses Wickels sind auch in Fig. 1 zu sehen, und zwar als Ansatzlinien 70.

Dieser Wickel ist, wie bereits, erwähnt, ggf. ein Polyamid-Abreißband. Dieser Wickel wird bei starker Pressung überlappend gelegt, er gewährleistet die endgültig zu erzielende Form.

Weiterhin besteht die Möglichkeit, die positive Form 88 in dem Formkörper 3 zu belassen, beispielsweise auszubohren, um dann einen Drehkörper zu erhalten, wie es in Fig. 16 angedeutet ist.

Die Fig. 17 und 18 zeigen weitere Ausführungsbeispiele der Ausführung eines Formkörpers. Fig. 17 zeigt zwei miteinander verbundene Kegelstümpfe und Fig. 18 ein Vierkantrohr mit an den Enden unterschiedlicher Querschnittsgröße. In Fig. 18 ist noch die Möglichkeit angedeutet, die Flächen des Formkörpers 18 ballig auszubilden.

Wie bereits erwähnt, ist der Gedanke der Erfindung nicht auf die dargestellten Ausführungsbeispiele beschränkt. Es besteht die Möglichkeit, daß die Mehrfach- oder Doppelschicht als Einheit hergestellt wird und als Einheit eingelegt wird. Es besteht aber auch die Möglichkeit, die Mehrfach- oder Doppelschicht während des Verfahrens der Herstellung des Formkörpers zu bilden. Die Größen der Zellkerne, ihre Formgebung und ihre unterschiedlichen Dicken oder Höhen in den Schichten sind je nach Verwendungszweck des späteren Formkörpers variabel. Dabei nehmen die Zellkerne oder Waben von der positiven Form aus gesehen vorzw. nach außen in ihrer Größe zu. Werden die Zellkern- oder Wabenschichten streifenförmig ausgebildet, so sollten sie mit den Seitenkanten aneinanderliegend wendelförmig in das Laminat eingelegt werden. Es besteht aber auch die Möglichkeit der spiralförmigen Einlegung in die Laminatschichten, wobei dann das Ende der Spirale abgeflacht werden muß, damit sich keine Stufe in der Formgebung ergibt. Die Spiralform erstreckt sich dann vorzugsweise über die Gesamtlänge der Vorrichtung und geht vorzugsweise in vollständigen Windungen über die Außenform hinweg. Dabei wird zwischen der Spirale mindestens eine ebenfalls spiralförmig liegende Laminatschicht eingelegt. Diese kann dann als Verbindungsschicht dienen. Ggf. wird auch eine einfache Verbindungsschicht, bestehend aus einem Vlies, aus einem Gewebe od. dgl., zwischen die Spirale gelegt. Dies ist in Fig. 17 angedeutet.

Die verschiedenen Figuren zeigen im allgemeinen die Schalenschicht 2 bzw. 5 als unidirektionalliegende Kohlefasern, die durch Klebebänder 20 bzw. 50 miteinander verbunden sind. Es ist aber auch möglich, statt der unidirektionalen Kohlefasern diese als bereits mit Harz vorgetränkte Gelege, sogenannte Prepregs, auszubilden und einzusetzen, wobei das ganze Laminat anschließend unter Wärmezuführung aushärtet. Die Laminatschichten sind somit auf verschiedenste Art veränderbar, wobei das wichtigste aber die Schicht mit zellartigem Charakter bzw. die Zellkern- oder Wabenschicht bleibt, die eine bessere Stabilität und vor allem eine erhöhte Biegesteifigkeit des Formkörpers gewährleistet. Zellkern- oder Wabenschichten bilden das stabilste Gebilde. Aber auch für die positive Form können andere Materialien verwendet werden, als beispielsweise Polystyrol-Hartschaum. Es kann jeder beliebige geeignete Werkstoff eingesetzt werden. Die positive Form kann aber auch z. B. ein Stahldorn sein, der nach dem Aushärten des Formkörpers ausgestoßen wird. Ggf. kann als positive Form auch z. B. ein Glasrohr Verwendung finden, welches nach der Aushärtung des Formkörpers durch Zerstörung entfernt wird. So läßt sich auch der letzte Arbeitsgang variieren.

## Patentansprüche

1. Verfahren zur Herstellung eines Formkörpers aus Verbundmaterial, bei dem auf eine Positive Form kunstharzgetränkte Laminatschichten aufgebracht werden wobei beim Aufbau der Schichten in deren neutrale Zone eine aus mehreren Zellkern- oder Wabenschichten bestehende Mehrfach- bzw. Doppelschicht eingebracht wird, *dadurch gekennzeichnet*, daß die Mehrfach- oder Doppelschicht als Einheit hergestellt und als Einheit zwischen die Laminatschichten eingelegt wird, wobei zwischen jeweils zwei Zellkern oder Wabenschichten eine selbsttragende, lastaufnehmende Verbindungsschicht aus Glasgewebe, Carbon-Faservlies, Polyamid oder dergleichen oder aus kunstharzgetränktem Vlies oder Gewebe angeordnet wird.

2. Verfahren nach Anspruch 1, dadurch gekennzeichnet, daß die Mehrfach- oder Doppelschicht unterschiedlich große Zellkerne oder Waben in den einzelnen Schichten aufweist, wobei vorzugsweise die Höhe bzw. Größe der Zellkerne oder Waben in den einzelnen Schichten der Mehrfach- oder Doppelschicht von der positiven Form her gesehen nach außen zunimmt.

3. Verfahren nach Anspruch 1 dadurch gekennzeichnet, daß die Mehrfach- oder Doppelschicht rohrförmig gebogen oder stoßend gelegt in die Laminate eingelegt ist.

4. Verfahren nach Anspruch 1 dadurch gekennzeichnet, daß die Mehrfach- oder Doppelschicht streifenförmig ausgebildet ist und mit den Seitenkanten aneinander liegend bzw. wendelförmig in das Laminat eingelegt wird.

5. Verfahren nach Anspruch 1 dadurch gekennzeichnet, daß die Mehrfach-oder Doppelschicht spiralförmig in die Laminatschicht eingelegt ist.

6. Verfahren nach Anspruch 5, dadurch gekennzeichnet, daß zwischen der Spirale mindestens eine, ebenfalls spiralförmig liegende Laminatschicht eingelegt ist.

7. Verfahren nach Anspruch 1 dadurch gekennzeichnet, daß die Laminatschicht(en) als Stütz- und/oder Schalenschicht(en) (1, 2) ausgebildet ist bzw. sind, wobei sie vorzugsweise kunstharzgetränkt feucht aufgebracht und ausgehärtet werden.

8. Verfahren nach Anspruch 1 dadurch gekennzeichnet, daß nach Aufbringung von Stütz- und/oder Schalenschichten als erste Laminatschicht auf die positive Form oder den Kern und anschließende Auflage der Mehrfach- oder Doppelschicht eine weitere Laminatschicht, bestehend aus Stütz- und/oder Schalenschichten, aufgebracht wird.

9. Verfahren nach Anspruch 1 und einem der nachfolgenden Ansprüche, dadurch gekennzeichnet, daß der fertige Schichtaufbau durch einen Wickel aus einem Preßband gehalten wird, der nach Aushärtung entfernbar ist, wobei der Wickel vorzugsweise aus einem Polyamid-Abreißband besteht.

10. Verfahren nach Anspruch 1, dadurch gekennzeichnet, daß auf die positive Form als erste Laminatschicht eine innere Stützschicht aus Glasfaser, Glasfasergewebe, -gewirke oder -geflecht als Strumpf oder gewickelt und eine innere Schalenschicht aus unidirektional gelegten Kohlefasern aufgebracht wird sowie über die Mehrfach- oder Doppelschicht eine weitere Laminatschicht, bestehend aus äußerer Schalenschicht mit unidirektional gelegten Kohlefasern und eine äußere Stützschicht, bestehend aus Glasfasern, Glasfasergewebe, -gewirke oder geflecht als Strumpf oder gewickelt aufgebracht wird.

11. Verfahren nach Anspruch 10, dadurch gekennzeichnet, daß die Laminatschichten kunstharzgetränkt feucht aufgebracht werden.

12. Verfahren nach Anspruch 1 dadurch gekennzeichnet, daß die positive Form aus Schaumstoff besteht und kunststoffüberzogen ausgebildet ist.

13. Verfahren nach Anspruch 1 und 10, dadurch gekennzeichnet, daß die unidirektional gelegten Kohlefasern der Laminatschicht in Achsrichtung des Formkörpers gelegt sind.

14. Verfahren nach Anspruch 1 dadurch gekennzeichnet, daß eine der Schichten, und zwar vorzugsweise die äußere der Mehrfach- oder Doppelschicht eine gewellte Oberfläche aufweist.

15. Verfahren nach Anspruch 1 dadurch gekennzeichnet, daß die jeweilige Zellkern- oder Wabenschicht aus stranggezogenem Material besteht, das zu biegsamen Platten quer geschnitten ist.

16. Verfahren nach Anspruch 1, dadurch gekennzeichnet, daß die jeweilige Zellkern- oder Wabenschicht aus gewelltem oder gefalteten Folien- oder Papierstreifen besteht, die zusammengeklebt oder geschweißt sind.

17. Verfahren nach Anspruch 1 und einem der vorhergehenden Ansprüche, dadurch gekennzeichnet, daß jede Zellkern oder Wabenschicht aus einem Hartschaum besteht.

18. Verfahren nach Anspruch 17, dadurch gekennzeichnet, daß der Hartschaum aus Polyurethan bzw. Polyvinylchlorid, Polyacryl, Polystyrol, Epoxyd, Polyethylen oder Polyester besteht.

19. Verfahren nach Anspruch 17, dadurch gekennzeichnet, daß der Hartschaum eine mittelporige Struktur aufweist und geschlossen- oder offenporig ausgebildet ist.

20. Verfahren nach Anspruch 17, dadurch gekennzeichnet, daß die Komponenten des Hartschaums in flüssiger Form auf die mit dem ersten Laminat versehene Form aufgebracht wird und auf dem halbfertigen Werkstück zur Aufschäumung gebracht wird.

21. Verfahren nach Anspruch 1 dadurch gekennzeichnet, daß als innere und/oder äußere Schalenschicht ein bereits mit Harz vorgetränktes Gelege, ein sogenanntes Prepregs, verwendet wird, wobei das ganze Laminat anschließend unter Wärmezuführung aushärtet.

Claims

1. A process for the production of a shaped body of composite material wherein synthetic resin-impregnated laminate layers are applied to a positive shaping member, wherein the operation of building up the layers includes introducing in the neutral zone thereof a multiple or double layer comprising a plurality of cell core or honeycomb layers, characterised in that the multiple or double layer is produced as a unit and is inserted as a unit between the laminate layers, wherein disposed between each two cell core or honeycomb layers is a self-supporting, load-carrying connecting layer of glass cloth, carbon fibre fleece, polyamide or the like or synthetic resin-impregnated fleece or cloth.

2. A process according to claim 1 characterised in that the multiple or double layer has cell cores or honeycombs of different sizes in the individual layers, wherein preferably the height or size of the cell cores or honeycombs in the individual layers of the multiple or double layer increases outwardly, as viewed from the positive shaping member.

3. A process according to claim 1 characterised in that the multiple or double layer is introduced into the laminate in the condition of being bent into a tubular configuration or laid in butting relationship.

4. A process according to claim 1 characterised in that the multiple or double layer is of a strip-like configuration and is introduced into the laminate with the side edges bearing against each other or in a coil form.

5. A process according to claim 1 characterised in that the multiple or double layer is introduced into the laminate layer in a spiral form.

6. A process according to claim 5 characterised in that at least one laminate layer which is also disposed in a spiral form is laid between the spiral.

7. A process according to claim 1 characterised in that the laminate layer or layers is or are in the form of a support and/or shell layer or layers (1,

2), wherein they are preferably applied wet in a synthetic resin-saturated condition and are hardened.

8. A process according to claim 1 characterised in that after the application of the support and/or shell layers as the first laminate layer on the positive shaping member or the core and the subsequent application of the multiple or double layer, a further laminate layer comprising support and/or shell layers is applied.

9. A process according to claim 1 and one of the following claims characterised in that the finished layer structure is held by a wring comprising a pressing strip which can be removed after hardening, wherein the winding preferably comprises a polyamide tearoff strip.

10. A process according to claim 1 characterised by applying to the positive shaping member as a first laminate layer an inner support layer of glass fibre, glass fibre woven cloth, knitted cloth or mesh as a stocking or in a wound configuration, and an inner shell layer of unidirectionally laid carbon fibres, and applying over the multiple or double layer a further laminate layer comprising an outer shell layer with unidirectionally laid carbon fibres and an outer support layer comprising glass fibres, glass fibre woven cloth, knitted cloth or mesh in the form of a stocking or in a wound configuration.

11. A process according to claim 10 characterised in that the laminate layers are applied wet in a synthetic resin-impregnated condition.

12. A process according to claim 1 characterised in that the positive shaping member comprises foam and is plastics-coated.

13. A process according to claim 1 and claim 10 characterised in that the unidirectionally laid carbon fibres of the laminate layer are laid in the axial direction of the shaped body.

14. A process according to claim 1 characterised in that one of the layers, are specifically preferably the outer one of the multiple or double layer, has a corrugated surface.

15. A process according to claim 1 characterised in that the respective cell core or honeycomb layer comprises extruded material which is cut transversely to provide flexible plates.

16. A process according to claim 1 characterised in that the respective cell core or honeycomb layer comprises corrugated or folded foil or paper strips which are welded or glued together.

17. A process according to claim 1 and one of the preceding claims characterised in that each cell core or honeycomb layer comprises a hard foam.

18. A process according to claim 17 characterised in that the hard foam comprises polyurethane or polyvinyl chloride, polyacryl, polystyrene, epoxy, polyethylene or polyester.

19. A process according to claim 17 characterised in that the hard foam is of a medium-pore structure and is of a closed or open pore configuration.

20. A process according to claim 17 characterised in that theonents of the hard foam are applied in liquid form to the shaping member provided with the first laminate and are caused to foam up on the semi-finished workpiece.

21. A process according to claim 1 characterised in that the inner and/or outer shell layer is a structure which is already pre-inpregnated with resin, referred to as a prepregs, with the entire laminate then being hardened with the application of heat.

## Revendications

1. Procédé de fabrication d'un objet moulé en matériau composite, dans lequel des couches de stratifié imprégnées de résine synthétique sont appliquées sur un moule positif, et dans lequel, pour constituer les couches, dans leur zone neutre, on place une couche multiple ou double, comportant elle-même plusieurs couches cellulaires ou en nids d'abeille, caractérisé en ce que la couche multiple ou double est réalisée comme une unité et placée comme une unité entre les couches de stratifié, une couche de liaison autoportante, absorbant les charges, en tissu de verre, mat de fibres de carbone, polyamide ou matériau similaire ou en mat ou tissu imprégnés de résine synthétique, étant placée entre deux couches cellulaires ou couches en nids d'abeille.

2. Procédé selon la revendication 1, caractérisé en ce que la couche multiple ou double comporte dans ses différentes couches des cellules ou des nids d'abeille de dimensions différentes, la hauteur ou les dimensions des cellules ou des nids d'abeille des différentes couches de la couche multiple ou double, augmentant de préférence vers l'extérieur, vues à partir du moule positif.

3. Procédé selon la revendication 1, caractérisé en ce que la couche multiple ou double est courbée en forme de tube ou placée bout-à-bout dans les stratifiés.

4. Procédé selon la revendication 1, caractérisé en ce que la couche multiple ou double est en forme de bande et placée dans le stratifié, avec ses bords latéraux appliqués l'un contre l'autre, ou en forme d'hélice.

5. Procédé selon la revendication 1, caractérisé en ce que la couche multiple ou double est placée en spirale dans la couche de stratifié.

6. Procédé selon la revendication 5, caractérisé en ce qu'au moins une couche de stratifié, également en spirale, est placée entre les spires de la spirale.

7. Procédé selon la revendication 1, caractérisé en ce que la (les) couche(s) de stratifié est (sont) une (des) couche(s) de soutien et/ou en coque (1, 2), qui sont de préférence appliquées alors que la résine synthétique d'imprégnation est encore humide, et que l'on laisse durcir.

8. Procédé selon la revendication 1, caractérisé en ce qu'après application des couches de soutien et/ou en coque, on applique une autre couche de stratifié constituée de couches de soutien et/ou en coque, sur le moule positif ou sur le noyau, comme première couche de stratifié et pour servir ensuite d'appui à la couche multiple ou double.

9. Procédé selon la revendication 1 et l'une des revendications suivantes, caractérisé en ce que les couches ainsi constituées et terminées sont maintenues par un bandage enroulé de compression qui est enlevé après durcissement, ce bandage étant constitué de préférence par une bande en polyamide à arracher.

10. Procédé selon la revendication 1, caractérisé en ce que l'on applique sur le moule positif, comme première couche de stratifié, une couche de soutien intérieure en fibre de verre, en tissu, tricot ou tresse en fibre de verre, à la manière d'une chaussette ou que l'on enroule, ainsi qu'une couche en coque intérieure en fibres de carbone unidirectionnelles, et on applique sur la couche multiple ou double, une autre couche de stratifié, constituée d'une couche en coque extérieure à fibres de carbone unidirectionnelles et une couche de soutien extérieure, constituée de fibre de verre, de tissu, de tricot ou de tresse en fibre de verre, à la manière d'une chaussette ou que l'on enroule.

11. Procédé selon la revendication 10, caractérisé en ce que les couches de stratifié sont appliquées alors que la résine d'imprégnation est encore humide.

12. Procédé selon la revendication 1, caractérisé en ce que le moule positif est réalisé dans une mousse revêtue de matière plastique.

13. Procédé selon la revendication 1 et 10, caractérisé en ce que les fibres de carbone unidirectionnelles de la couche de stratifié sont placées dans la direction axiale de l'objet moulé.

14. Procédé selon la revendication 1, caractérisé en ce que l'une des couches, de préférence la couche multiple ou double extérieure, a une surface ondulée.

15. Procédé selon la revendication 1, caractérisé en ce que la couche cellulaire ou en nids d'abeille est réalisée dans un matériau étiré qui est coupé transversalement pour former des plaques souples.

16. Procédé selon la revendication 1, caractérisé en ce que la couche cellulaire ou en nids d'abeille est réalisée dans des bandes de feuilles ou de papier ondulé ou plissé, qui sont assemblées par collage ou soudées.

17. Procédé selon la revendication 1 et l'une des revendications précédentes, caractérisé en ce que chaque couche cellulaire ou en nids d'abeille est réalisée dans une mousse rigide.

18. Procédé selon la revendication 17, caractérisé en ce que la mousse rigide est en polyuréthanne ou chlorure de polyvinyle, polyacryle, polystyrène, époxyde, polyéthylène ou polyester.

19. Procédé selon la revendication 17, caractérisé en ce que la mousse rigide a une structure moyennement poreuse, et présente des pores fermés ou ouverts.

20. Procédé selon la revendication 17, caractérisé en ce que les composants de la mousse rigide sont appliques sous forme liquide, sur le moule pourvu du premier stratifié, et soumis à expansion sur la pièce d'ouvrage semi-finie.

21. Procédé selon la revendication 1, caractérisé en ce que l'on utilise comme couche en coque intérieure et/ou extérieure, une structure préimprégnée de résine, appelée prepreg, l'ensemble du stratifié durcissant ensuite sous l'action de la chaleur.

Fig.1

Fig.2

Fig.3

8

80

80'

81

81'

Fig.4

83

84

84

89

88

1

Fig.5

4

2

4

(1),2

1

88

Fig.6

5

4

88

6

Fig.7

3

Fig.12

Fig.13

Fig.8

Fig.10

Fig.9

Fig.9a

Fig.11

*Fig. 14*

*3*

*Fig. 15*

*3*

*7*

*7*

*Fig. 16*

*3*

*88*

*Fig. 17*

*3*

*4*

*40*

*Fig. 18*

*3*